# EUROPEAN PATENT SPECIFICATION

(11) **EP 4 468 463 B1**
(45) Date of publication and mention of the grant of the patent: **05.11.2025**
(21) Application number: 23912448.0
(22) Date of filing: 11.09.2023
(51) Int. Cl.: H01M 10/6556, H01M 10/613, H01M 10/643, H01M 10/625, H01M 10/6568

(54) **BATTERY PACK AND VEHICLE COMPRISING SAME**
BATTERIEPACK UND FAHRZEUG DAMIT
BLOC-BATTERIE ET VÉHICULE LE COMPRENANT

(30) Priority: 28.12.2022 KR 20220186694; 17.08.2023 KR 20230107852
(43) Date of publication of application: 27.11.2024
(73) Proprietor: LG Energy Solution, Ltd., Seoul 07335 (KR)
(72) Inventor: BAEK, Seung-Ryul, Daejeon 34122 (KR)
(74) Representative: Plasseraud IP
(86) International application number: PCT/KR2023/013604
(87) International publication number: WO 2024/143764

(56) References cited:
- EP-A2- 2 610 947
- DE-A1- 10 238 235
- GB-A- 199 966
- JP-A- 2004 504 702
- JP-A- 2017 215 057
- KR-A- 20110 033 548
- KR-A- 20150 035 264
- KR-A- 20150 035 264
- KR-A- 20180 010 989
- KR-A- 20200 130 677
- US-A1- 2014 093 755

## Description

### TECHNICAL FIELD

The present application claims priority to Korean Patent Application No. 10-2022-0186694 filed on December 28, 2022 and Korean Patent Application No. 10-2023-0107852 filed on August 17, 2023 in the Republic of Korea.

The present disclosure relates to a battery pack and a vehicle including the same, and more specifically, to a battery pack capable of guiding uniform distribution of a cooling fluid and a vehicle including the same.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module including at least one battery cell first, and then configure a battery pack or a battery rack by using such at least one battery module and adding other components.

In the case of a conventional battery pack, it is configured to include a battery module including a plurality of battery cells and a pack case accommodating the battery module. Here, the battery module includes battery cells and may be provided with a plurality of cooling tubes through which a cooling fluid flows to cool the battery cells.

However, in the case of a conventional battery pack, when a cooling fluid is supplied to a plurality of cooling tubes, it is difficult to distribute the cooling fluid uniformly to each cooling tube, resulting in uneven flow of the cooling fluid, whereby there is a problem of deteriorating cooling performance.

EP 2 610 947 A2 and US 2014/093755 describe battery pack with cooling tubes.

### DISCLOSURE

### Technical Problem

The present disclosure is designed to solve the problems of the related art, and therefore the present disclosure is directed to providing a battery pack capable of uniformly distributing a cooling fluid to each of a plurality of cooling tubes, and a vehicle including the same.

In addition, the present disclosure is directed to providing a battery pack that facilitates the formation of cooling channels and is more advantageous for structural design changes, and a vehicle including the same.

However, technical problems to be solved by the present disclosure are not limited to the above-described problems, and other problems not mentioned herein may be clearly understood by those skilled in the art from the following description of the present disclosure.

### Technical Solution

According to one aspect of the present invention, there is provided a battery pack including: a battery module including a plurality of battery cells, and having a plurality of cooling tubes disposed between the plurality of battery cells and through which a cooling fluid for cooling the battery cells flows; a pack case accommodating the battery module; and a cooling fluid distribution member that distributes a cooling fluid toward the plurality of cooling tubes, wherein the cooling tube and the cooling fluid distribution member are connected in contact with each other.

The battery pack includes a gasket member surrounding the outer side of the cooling tube and the cooling fluid distribution member.

The gasket member includes a body portion in which a hollow is formed for the cooling tube and the cooling fluid distribution member to be inserted; and an extension portion protruding from both ends of the body portion.

In an embodiment, the extension portion may be formed to spread outward from the end of the body portion.

According to the invention, a locking groove is formed on the outer side of at least one of the cooling tube and the cooling fluid distribution member, and a locking protrusion is formed on the inner side of the body portion so as to be coupled to the locking groove, wherein the locking protrusion is formed to be inclined toward the center portion from both ends of the body portion.

In an embodiment, the gasket member may be made of an elastic material.

In an embodiment, the gasket member may be made of rubber.

In an embodiment, the battery pack may include a fluid supply member that supplies a cooling fluid, wherein the cooling fluid distribution member may include a distribution pipe having a plurality of coupling portions respectively coupled to the plurality of cooling tubes; and a connection pipe connecting the distribution pipe and the fluid supply member.

In an embodiment, the battery pack may include a pipe connection port connecting the distribution pipe and the connection pipe.

In an embodiment, the connection pipe may include a first connection pipe coupled to the fluid supply member; and a second connection pipe connected to the first connection pipe and connected to the distribution pipe.

In an embodiment, the battery pack may include a multi-port connecting the first connection pipe and the second connection pipe.

In an embodiment, the multi-port may be configured as a 3 way port, and the 3 way port may connect one first connection pipe and two second connection pipes.

In an embodiment, the battery pack may include a connector connecting the fluid supply member and the connection pipe.

Meanwhile, according to another aspect of the present disclosure, there may be provided a vehicle including a battery pack described above.

### Advantageous Effects

According to the various embodiments described above, there is an effect of uniformly distributing the cooling fluid to each of the plurality of cooling tubes.

Accordingly, there is an effect of securing cooling performance through uniform flow of the cooling fluid.

In addition, according to the various embodiments described above, there are effects of facilitating the formation of cooling channels and being more advantageous for structural design changes.

In addition, the present disclosure may have various other effects, which will be described in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is an overall perspective view of a battery pack according to an embodiment of the present disclosure.
FIG. 2 is a perspective view showing the interior of FIG. 1.
FIG. 3 is an enlarged view of portion A in FIG. 2.
FIG. 4 is an exploded perspective view of a battery pack according to an embodiment of the present disclosure.
FIG. 5 is an exploded perspective view of a battery module in a battery pack according to an embodiment of the present disclosure.
FIG. 6 is an exploded perspective view of a cooling fluid distribution member in a battery pack according to an embodiment of the present disclosure.
FIG. 7 is a view showing the flow of a cooling fluid in FIG. 6.
FIG. 8 is a perspective view of a battery module in a battery pack according to an embodiment of the present disclosure.
FIG. 9 is a cross-sectional view of the cooling fluid distribution member and gasket member of portion B in FIG. 8.
FIG. 10 is a cross-sectional view of a partial configuration of portion B in FIG. 8.
FIG. 11 is an exploded perspective view of FIG. 10.
FIG. 12 is a partially cutaway perspective view of a gasket member in a battery pack according to an embodiment, not part of the present invention.
FIG. 13 is a cross-sectional view of a modified embodiment, according to the invention, of the gasket member of FIG. 12.
FIG. 14 is a cross-sectional view of a cooling fluid distribution member, according to the invention, having a shape corresponding to the gasket member of FIG. 13.
FIG. 15 is a view for describing a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure, wherein the invention is defined in the appended claims.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

Throughout this specification, when a part 'includes' a component, it means that the part may further include other components rather than excluding other components unless specifically stated to the contrary.

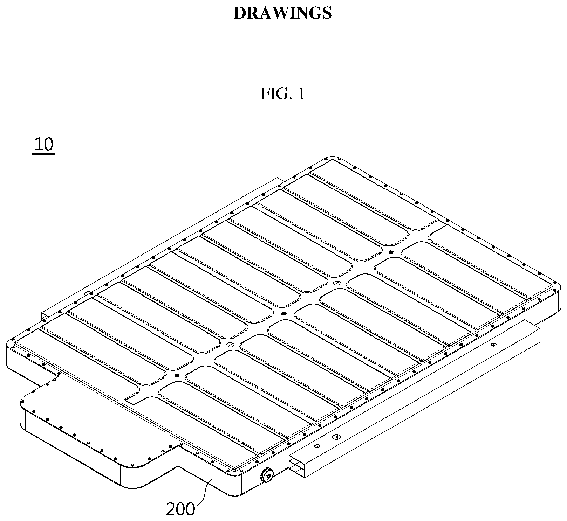

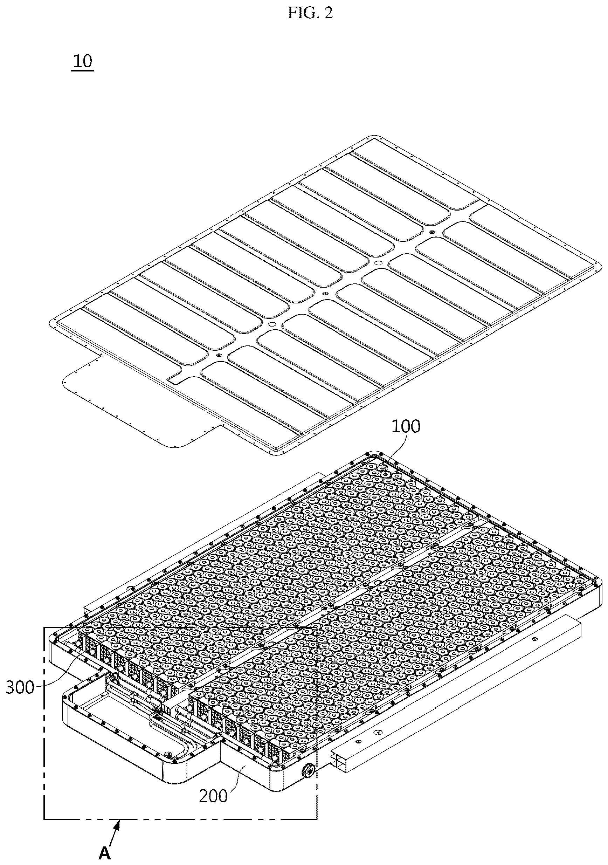

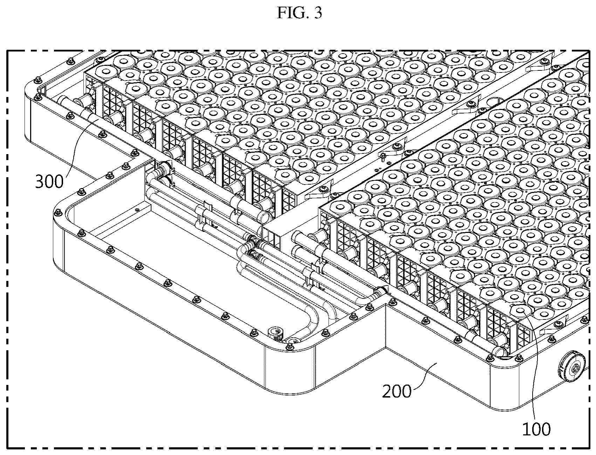

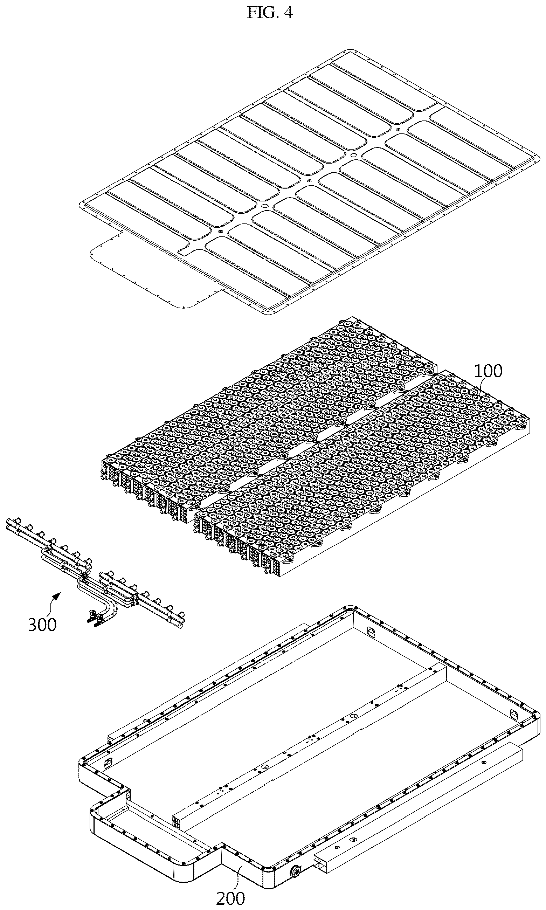

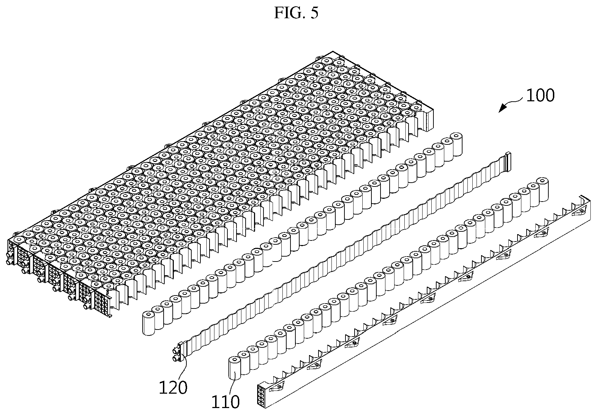

FIG. 1 is an overall perspective view of a battery pack according to an embodiment of the present disclosure, FIG. 2 is a perspective view showing the interior of FIG. 1, FIG. 3 is an enlarged view of portion A in FIG. 2, FIG. 4 is an exploded perspective view of a battery pack according to an embodiment of the present disclosure, and FIG. 5 is an exploded perspective view of a battery module in a battery pack according to an embodiment of the present disclosure.

Referring to FIGS. 1 to 5, the battery pack 10 according to an embodiment of the present disclosure may include a battery module 100, a pack case 200, and a cooling fluid distribution member 300.

Referring to FIG. 5, the battery module 100 includes a plurality of battery cells 110. And, the battery module 100 includes a plurality of cooling tubes 120. The plurality of cooling tubes 120 are disposed between the plurality of battery cells 110, and a cooling fluid for cooling the battery cells 110 flows through the cooling tubes 120. And, the battery module 100 may include a module case for accommodating the battery cells 110.

The battery cells 110 may be provided in various types. For example, the battery cells 110 may include a prismatic battery cell (not shown) or a pouch-type battery cell (not shown). The pouch-type battery cell may have a structure in which a unit cell arranged in the order of positive electrode plate-separator-negative electrode plate, or a bi-cell arranged in the order of positive electrode plate-separator-negative electrode plate-separator-positive electrode plate-separator-negative electrode plate are stacked in plurality according to the battery capacity. And, the pouch-type battery cell may have an electrode lead. The electrode lead is a type of terminal that is exposed to the outside and connected to an external device and may be made of a conductive material. The electrode lead may include a positive electrode lead and a negative electrode lead.

Alternatively, as shown in FIGS. 2 to 5, the battery cell 110 may include a cylindrical battery cell. That is, the battery cell 110 provided in the battery pack 10 according to an embodiment of the present disclosure may vary, but the following description will focus on the case where the battery cell 110 is a cylindrical battery cell for convenience of description.

A cylindrical battery cell may include an electrode assembly, a battery can, a positive electrode current collector plate, a cell terminal, and a negative electrode current collector plate.

The electrode assembly includes a positive electrode plate, a negative electrode plate, and a separator, and the separator is interposed between the positive electrode plate and the negative electrode plate. And, it may be prepared as a jelly roll type in which a center hole is formed by being wound in one direction while the separator is interposed between the positive electrode plate and the negative electrode plate.

For example, the electrode assembly may be manufactured by winding a laminate formed by sequentially stacking a negative electrode plate, a separator, a positive electrode plate, and a separator at least once. Here, the positive electrode plate and the negative electrode plate may be formed in a sheet shape. That is, the electrode assembly may be a winding type electrode assembly. The electrode assembly may have any winding structure well known in the related art without limitation.

A positive electrode active material is applied on one or both sides of the positive electrode plate, and a negative electrode active material is applied on one or both sides of the negative electrode plate. The positive electrode active material coated on the positive electrode plate and the negative electrode active material coated on the negative electrode plate can be used without limitation as long as they are active materials known in the art.

And, as the separator, a porous polymer film, for example, a porous polymer film made of polyolefin polymers such as ethylene homopolymer, propylene homopolymer, ethylene/butene copolymer, ethylene/hexene copolymer, ethylene/methacrylate copolymer, and the like may be used alone or by stacking them. As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. It is also possible that the separator itself is made of a coating layer of inorganic particles. The particles constituting the coating layer may have a structure coupled to a binder so that an interstitial volume exists between adjacent particles.

The battery can is formed in a cylindrical shape to accommodate an electrode assembly inside the battery can, and may be electrically connected to a negative electrode plate of the electrode assembly. Accordingly, the battery can may have the same polarity as the negative electrode plate, that is, a negative electrode, but is not limited thereto.

And, a gap of a predetermined size is formed between the battery can and the electrode assembly (between the battery can and the positive electrode current collector plate when the positive electrode current collector plate is coupled to the electrode assembly), and an insulator may be interposed between the gap. The battery can may be made of a conductive metal, such as aluminum, steel, stainless steel, or the like, but is not limited thereto.

The positive electrode current collector plate is electrically connected to the positive electrode plate, and for example, the positive electrode current collector plate may be connected to the positive electrode plate at the top of the electrode assembly.

The cell terminal is made of a metal material having conductivity and is electrically connected to the positive electrode current collector plate. And, the cell terminal is electrically connected to the positive electrode plate of the electrode assembly through the positive electrode current collector plate, thereby having a positive polarity. That is, the cell terminal may function as a positive electrode terminal.

The negative electrode current collector plate is electrically connected to the negative electrode plate. The negative electrode current collector plate may be made of a conductive metal material such as aluminum, steel, copper, nickel, or the like.

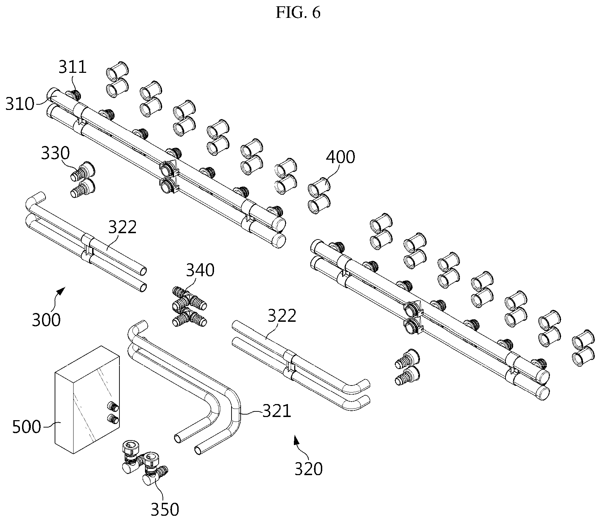

Referring to FIG. 5, the cooling tube 120 is provided in plurality. The cooling tube 120 may be provided in various tube shapes so that a cooling fluid for cooling the battery cell 110 flows. And, a plurality of cooling tubes 120 are disposed between the plurality of battery cells 110. In this case, one cooling tube 120 may cool the battery cells 110 in contact with both sides, respectively. And, the fluid flowing through the cooling tube 120 may vary, and may be, for example, water, but is not limited thereto. The cooling fluid may be supplied from a fluid supply member 500 (see FIG. 6), and the fluid supply member 500 may be connected to the cooling fluid distribution member 300.

It is advantageous that the cooling fluid flowing through each of the plurality of cooling tubes 120 flows uniformly to improve cooling performance. Referring to FIGS. 2 and 3, when the cooling tube 120 is provided in plurality, the cooling fluid distribution member 300 is coupled to the cooling tube 120 for uniformity of cooling of the battery cells 110.

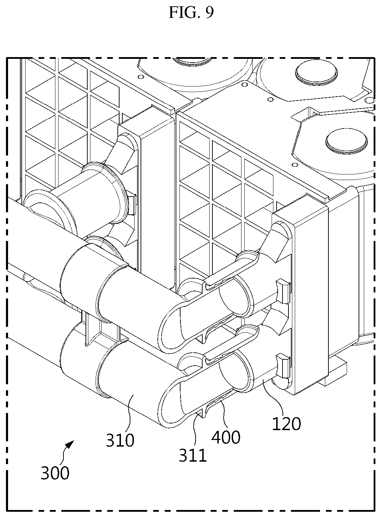

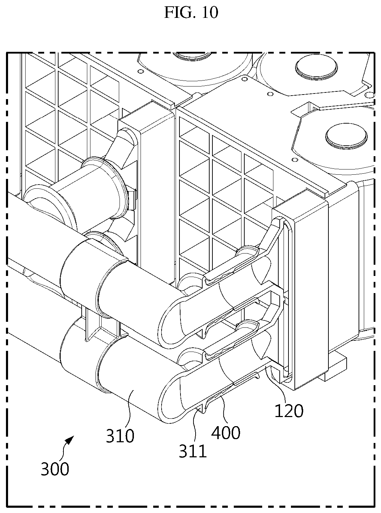

The cooling tube 120 may be coupled to the cooling fluid distribution member 300 in various ways, and for example, the cooling tube 120 and the cooling fluid distribution member 300 may be connected in contact with each other (see FIGS. 9 and 10). That is, the cooling tube 120 and the coupling portion 311 of the distribution pipe 310 of the cooling fluid distribution member 300 are connected in contact with each other.

And, a gasket member 400 may be provided to surround the outer side of the cooling tube 120 and the cooling fluid distribution member 300. This will be described in detail later.

Referring to FIGS. 2 and 4, the pack case 200 accommodates the battery module 100. To this end, a receiving space for accommodating the battery module 100 may be provided in the pack case 200. And, various devices for controlling charge/discharge of the battery cell 110, such as a BMS, a current sensor, a fuse, and the like, may be accommodated in or coupled to the pack case 200. And, a pack lead may be coupled to the pack case 200.

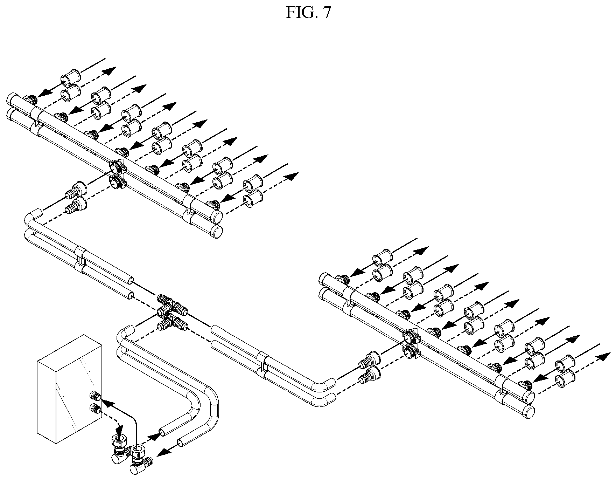

FIG. 6 is an exploded perspective view of a cooling fluid distribution member in a battery pack according to an embodiment of the present disclosure, and FIG. 7 is a view showing the flow of a cooling fluid in FIG. 6.

The cooling fluid distribution member 300 distributes the cooling fluid toward the plurality of cooling tubes 120. Here, it is preferable that the cooling fluid distribution member 300 distributes the cooling fluid uniformly to each of the plurality of cooling tubes 120.

Referring to FIG. 6, the cooling fluid distribution member 300 may be configured to include a distribution pipe 310 and a connection pipe 320. The distribution pipe 310 has a plurality of coupling portions 311 each coupled to a plurality of cooling tubes 120. The plurality of coupling portions 311 may be formed in parallel on the distribution pipe 310.

The coupling portion 311 may be formed in various ways, and for example, a cross-section thereof may be formed in a circular shape, but is not limited thereto. And, if necessary, the cross-section of the coupling portion 311 may be formed in more various shapes, such as a rectangle, a triangle, or other shapes. Here, the inner side of the coupling portion 311 is empty, through which the cooling fluid may move.

And, the plurality of coupling portions 311 may be spaced apart from each other to have a predetermined interval, and the cooling fluid flowing through the distribution pipe 310 moves to the cooling tube 120 through the plurality of coupling portions 311.

The coupling portion 311 is formed to protrude from the end of the distribution pipe 310, where the coupling portion 311 may be integrally formed with the distribution pipe 310, or may be manufactured separately from the distribution pipe 310 and then coupled to the distribution pipe 310.

Referring to FIGS. 6 and 7, the distribution pipe 310 is connected to the connection pipe 320, and the cooling fluid supplied from the fluid supply member 500 moves to the distribution pipe 310 through the connection pipe 320.

The connection pipe 320 connects the distribution pipe 310 and the fluid supply member 500. Here, the connection pipe 320 may be connected to the distribution pipe 310 through a pipe connection port 330. That is, the pipe connection port 330 connects the distribution pipe 310 and the connection pipe 320. And, the connection pipe 320 may be connected to the fluid supply member 500 through a connector 350. That is, the connector 350 connects the fluid supply member 500 and the connection pipe 320.

The connection pipe 320 may include a first connection pipe 321 and a second connection pipe 322. The first connection pipe 321 may be coupled to the fluid supply member 500 through the connector 350. And, the second connection pipe 322 may be connected to the distribution pipe 310 through the pipe connection port 330.

In addition, the second connection pipe 322 may be connected to the first connection pipe 321 through a multi-port 340. That is, the multi-port 340 connects the first connection pipe 321 and the second connection pipe 322.

The multi-port 340 may vary and, for example, may be configured as a 3 way port, as shown in FIG. 6. Here, the 3 way port may be configured to connect one first connection pipe 321 and two second connection pipes 322. For example, two second connection pipes 322 may be respectively coupled to the 3 way port on both sides with respect to the 3 way port, and one first connection pipe 321 disposed in a direction crossing the two second connection pipes 322 may be coupled to the 3 way port. However, this is only one embodiment.

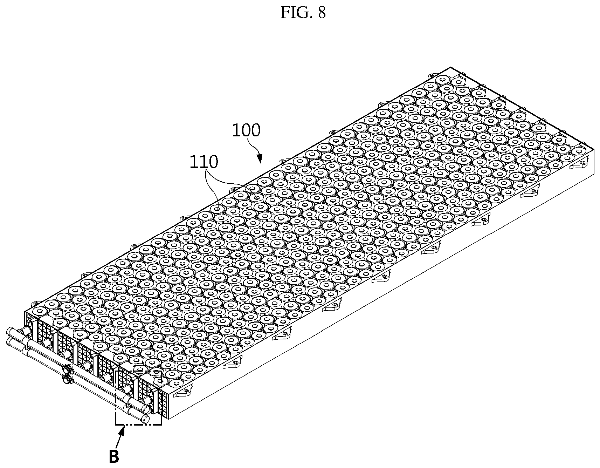

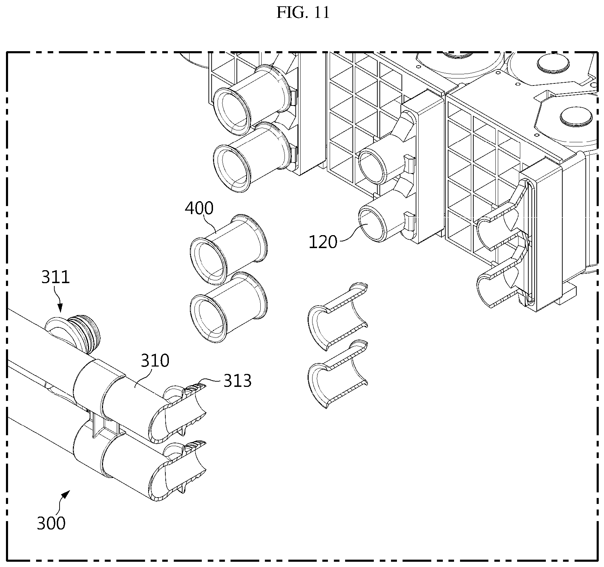

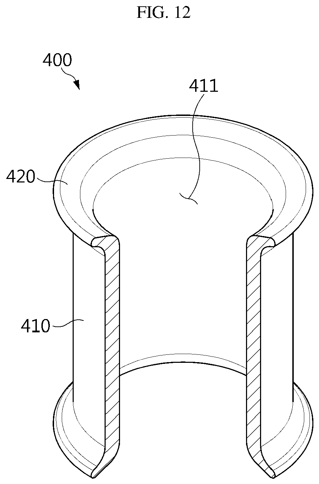

FIG. 8 is a perspective view of a battery module in a battery pack according to an embodiment of the present disclosure, FIG. 9 is a cross-sectional view of the cooling fluid distribution member and gasket member of portion B in FIG. 8, FIG. 10 is a cross-sectional view of a partial configuration of portion B in FIG. 8, FIG. 11 is an exploded perspective view of FIG. 10, and FIG. 12 is a partially cutaway perspective view of a gasket member in a battery pack according to an embodiment of the present disclosure.

Referring to FIGS. 8 to 12, the gasket member 400 is provided to surround the outer side of the cooling tube 120 and the cooling fluid distribution member 300. Specifically, the gasket member 400 is provided to surround the coupling portion 311 of the distribution pipe 310 of the cooling fluid distribution member 300 and the cooling tube 120 to prevent the cooling fluid from leaking. That is, the gap between the coupling portion 311 of the distribution pipe 310 and the cooling tube 120 is sealed for sealing. The gasket member 400 may be formed to have different widths, thicknesses, and the like depending on the required performance.

The gasket member 400 may be made of various materials, for example, various elastic materials. Specifically, the gasket member 400 may be made of various types of rubber, but is not limited thereto.

Referring to FIG. 12, the gasket member 400 may be configured to include a body portion 410 and an extension portion 420.

A hollow 411 may be formed in the body portion 410. And, referring to FIG. 10, the cooling tube 120 is inserted into the hollow 411 through one side of the body portion 410, the coupling portion 311 of the distribution pipe 310 is inserted through the other side of the body portion 410, and the cooling tube 120 and the coupling portion 311 come into contact with each other on the inner side the body portion 410 of the gasket member 400.

The extension portion 420 is formed to protrude from both ends of the body portion 410. The extension portion 420 may be formed to spread outward from the end of the body portion 410. Here, when the extension portion 420 has a shape that spreads outward from the body portion 410, the cooling tube 120 and the coupling portion 311 may be easily inserted into the body portion 410 of the gasket member 400.

Referring to FIG. 12, the inner side of the body portion 410 of the gasket member 400 may have a flat shape with no protrusions or grooves formed. However, a protrusion 313 may be formed on the outer side of the coupling portion 311 of the distribution pipe 310.

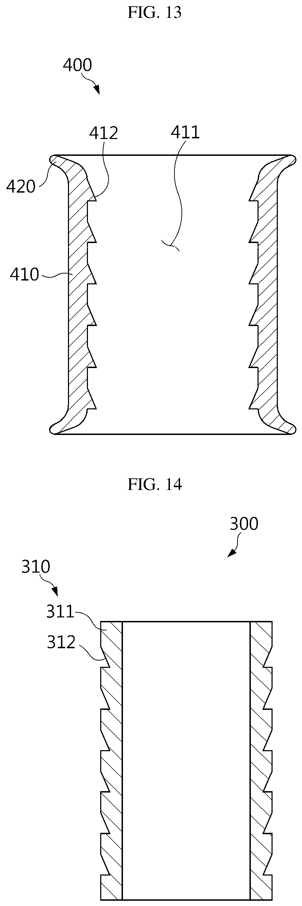

FIG. 13 is a cross-sectional view of a modified embodiment of the gasket member of FIG. 12, and FIG. 14 is a cross-sectional view of a cooling fluid distribution member having a shape corresponding to the gasket member of FIG. 13.

Referring to FIG. 13, a locking protrusion 412 is formed on the inner side of the body portion 410. And, referring to FIG. 14, a locking groove 312 is formed on the outer side of the coupling portion 311 of the distribution pipe 310 of the cooling fluid distribution member 300. Although not shown in the drawing, a locking groove (not shown) may also be formed on the outer side of the cooling tube 120.

When the cooling tube 120 and the coupling portion 311 are inserted into the body portion 410 of the gasket member 400, the locking protrusion 412 formed on the inner side of the body portion 410 may be coupled and fixed to the locking groove 312 on the outer side of the coupling portion 311 or the locking groove (not shown) on the outer side of the cooling tube 120.

Here, the locking protrusion 412 formed on the inner side of the body portion 410 may be formed to be inclined from both ends of the inner side of the body portion 410 toward the center portion, but is not limited thereto.

Meanwhile, as a modified embodiment, a locking groove (not shown) may be formed on the inner side of the body portion 410, and a locking protrusion (not shown) may also be formed on the outer side of the coupling portion 311 of the distribution pipe 310 or the outer side of the cooling tube 120.

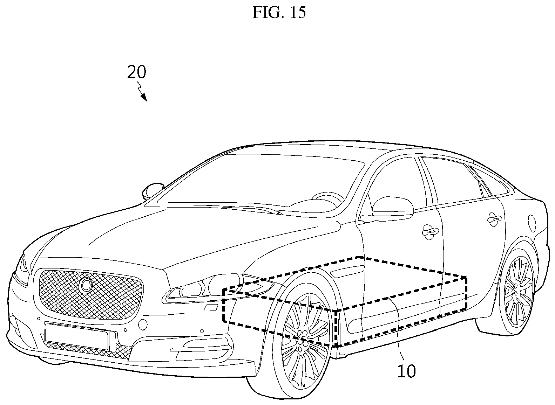

FIG. 15 is a view for describing a vehicle including a battery pack according to an embodiment of the present disclosure.

Referring to FIG. 15, a vehicle 20 according to an embodiment of the present disclosure may include one or more battery packs 10 described above. And, the battery pack 10 according to an embodiment of the present disclosure may be applied to the vehicle 20, for example, a predetermined vehicle 20 provided to use electricity, such as an electric vehicle or a hybrid vehicle.

And, the vehicle 20 according to an embodiment of the present disclosure may further include various other components included in the vehicle 20 in addition to the battery pack 10. For example, the vehicle 20 according to an embodiment of the present disclosure may further include a vehicle body, a motor, or a control device such as an electronic control unit (ECU) in addition to the battery pack 10 according to an embodiment of the present disclosure.

Also, an energy storage device according to an embodiment of the present disclosure includes one or more battery packs 10 according to an embodiment of the present disclosure described above. In addition, the energy storage device according to an embodiment of the present disclosure may further include general components included in energy storage devices in addition to the battery pack 10. In particular, the energy storage device according to an embodiment of the present disclosure may be a residential (building) energy storage device for home or office use, which is used to store energy in a residential home, office home, or building.

In addition, in order to have a large energy capacity, the energy storage device may include a plurality of battery packs 10 according to an embodiment of the present disclosure electrically connected to each other. In addition, the energy storage device according to an embodiment of the present disclosure may further include various other components of the energy storage device known at the time of filing the present disclosure. Moreover, this energy storage device may be used in various places or devices, such as a smart grid system or an electric charging station.

According to the various embodiments described above, there may be provided a battery pack 10 capable of guiding uniform distribution of the cooling fluid toward the cooling tubes 120 and a vehicle 20 including the same.

Accordingly, it is possible to provide a battery pack 10 capable of securing cooling performance through uniform flow of the cooling fluid and a vehicle 20 including the same.

In addition, according to the various embodiments described above, it is possible to provide a battery pack 10 that facilitates the formation of cooling channels and is more advantageous for structural design changes, and a vehicle 20 including the same.

The terms indicating directions as used herein such as upper, lower, left, and right are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious to those skilled in the art that a variety of modifications and changes may be made thereto within the technical aspects of the present disclosure and the equivalent scope of the appended claims. Therefore, the embodiments disclosed above should be considered from an illustrative perspective rather than a limiting perspective. That is, the scope of the true technical idea of the present disclosure is shown in the claims.

### INDUSTRIAL APPLICABILITY

The present disclosure relates to a battery pack and a vehicle including the same, and is particularly applicable to industries related to secondary batteries.

## Claims

1. A battery pack (10), comprising:
a battery module (100) comprising a plurality of battery cells (110), and having a plurality of cooling tubes (120) disposed between the plurality of battery cells (110) and through which a cooling fluid for cooling the battery cells (110) flows;
a pack case (200) accommodating the battery module (100); and
a cooling fluid distribution member (300) that distributes a cooling fluid toward the plurality of cooling tubes (120),
wherein the cooling tube and the cooling fluid distribution member (300) are connected in contact with each other,
a gasket member (400) surrounding the outer side of the cooling tube and the cooling fluid distribution member (300),
wherein the gasket member (400) comprises:
a body portion (410) in which a hollow (411) is formed for the cooling tube and the cooling fluid distribution member (300) to be inserted; and
an extension portion (420) protruding from both ends of the body portion (410),
wherein a locking protrusion (412) is formed to be inclined toward the center portion from both ends of the body portion (410),
wherein a locking groove (312) is formed on the outer side of at least one of the cooling tube and the cooling fluid distribution member (300), and
the locking protrusion (412) is formed on the inner side of the body portion (410) so as to be coupled to the locking groove (312).

2. The battery pack (10) according to claim 1,
wherein the extension portion (420) is formed to spread outward from the end of the body portion (410).

3. The battery pack (10) according to claim 1,
wherein the gasket member (400) is made of an elastic material.

4. The battery pack (10) according to claim 3,
wherein the gasket member (400) is made of rubber.

5. The battery pack (10) according to claim 1, comprising
a fluid supply member (500) that supplies a cooling fluid,
wherein the cooling fluid distribution member (300) comprises:
a distribution pipe (310) having a plurality of coupling portions (311) respectively coupled to the plurality of cooling tubes (120); and
a connection pipe (320) connecting the distribution pipe (310) and the fluid supply member (500).

6. The battery pack (10) according to claim 5, comprising
a pipe connection port (330) connecting the distribution pipe (310) and the connection pipe (320).

7. The battery pack (10) according to claim 5,
wherein the connection pipe (320) comprises:
a first connection pipe (321) coupled to the fluid supply member (500); and
a second connection pipe (322) connected to the first connection pipe (321) and connected to the distribution pipe (310).

8. The battery pack (10) according to claim 7, comprising
a multi-port (340) connecting the first connection pipe (321) and the second connection pipe (322).

9. The battery pack (10) according to claim 8,
wherein the multi-port (340) is configured as a 3 way port, and
the 3 way port connects one first connection pipe (321) and two second connection pipes (322).

10. The battery pack (10) according to claim 5, comprising
a connector (350) connecting the fluid supply member (500) and the connection pipe (320).

11. A vehicle (20) comprising a battery pack (10) according to any one of claims 1 to 10.

## Patentansprüche

1. Batteriepack (10), umfassend:
ein Batteriemodul (100), welches eine Mehrzahl von Batteriezellen (110) umfasst,
und eine Mehrzahl von Kühlrohren (120) aufweist, welche zwischen der Mehrzahl von Batteriezellen (110) angeordnet sind und durch welche ein Kühlfluid zum Kühlen der Batteriezellen (110) strömt;
ein Packgehäuse (200), welches das Batteriemodul (100) aufnimmt; und
ein Kühlfluidverteilungselement (300), welches ein Kühlfluid zu der Mehrzahl von Kühlrohren (120) verteilt,
wobei das Kühlrohr und das Kühlfluidverteilungselement (300) in Kontakt miteinander verbunden sind,
ein Dichtungselement (400), welches die äußere Seite des Kühlrohrs und das Kühlfluidverteilungselement (300) umgibt,
wobei das Dichtungselement (400) umfasst:
einen Körperabschnitt (410), in welchem ein Hohlraum (411) gebildet ist, zu dem Einfügen des Kühlrohrs und des Kühlfluidverteilungselements (300); und
ein Verlängerungsabschnitt (420), welcher von beiden Enden des Körperabschnitts (410) hervorsteht,
wobei ein Verriegelungsvorsprung (412) derart gebildet ist, dass er von beiden Enden des Körperabschnitts (410) zum mittleren Abschnitt hin geneigt ist,
wobei eine Verriegelungsnut (312) an der äußeren Seite von mindestens einem des Kühlrohrs und des Kühlfluidverteilungselements (300) gebildet ist, und
der Verriegelungsvorsprung (412) an der inneren Seite des Körperabschnitts (410) derart gebildet ist, dass er mit der Verriegelungsnut (312) gekoppelt ist.

2. Batteriepack (10) nach Anspruch 1,
wobei der Verlängerungsabschnitt (420) derart gebildet ist, dass er sich vom Ende des Körperabschnitts (410) nach außen erstreckt.

3. Batteriepack (10) nach Anspruch 1,
wobei das Dichtungselement (400) aus einem elastischen Material hergestellt ist.

4. Batteriepack (10) nach Anspruch 3,
wobei das Dichtungselement (400) aus Gummi hergestellt ist.

5. Batteriepack (10) nach Anspruch 1, umfassend:
ein Fluidzufuhrelement (500), welches ein Kühlfluid liefert,
wobei das Kühlfluidverteilungselement (300) umfasst:
ein Verteilungsrohr (310) mit einer Mehrzahl von Kopplungsabschnitten (311), welche jeweils mit der Mehrzahl von Kühlrohren (120) gekoppelt sind; und
ein Verbindungsrohr (320), welches das Verteilungsrohr (310) und das Fluidzufuhrelement (500) verbindet.

6. Batteriepack (10) nach Anspruch 5, umfassend:
einen Rohrverbindungsanschluss (330), welcher das Verteilungsrohr (310) und das Verbindungsrohr (320) verbindet.

7. Batteriepack (10) nach Anspruch 5,
wobei das Verbindungsrohr (320) umfasst:
ein erstes Verbindungsrohr (321), welches mit dem Fluidzufuhrelement (500) gekoppelt ist; und
ein zweites Verbindungsrohr (322), welches mit dem ersten Verbindungsrohr (321) verbunden und mit dem Verteilungsrohr (310) verbunden ist.

8. Batteriepack (10) nach Anspruch 7, umfassend:
einen Mehrfachanschluss (340), welcher das erste Verbindungsrohr (321) und das zweite Verbindungsrohr (322) verbindet.

9. Batteriepack (10) nach Anspruch 8,
wobei der Mehrfachanschluss (340) als 3-Wege-Anschluss eingerichtet ist und der 3-Wege-Anschluss ein erstes Verbindungsrohr (321) und zwei zweite Verbindungsrohre (322) verbindet.

10. Batteriepack (10) nach Anspruch 5, umfassend:
einen Verbinder (350), welcher das Fluidzufuhrelement (500) und das Verbindungsrohr (320) verbindet.

11. Fahrzeug (20) umfassend einen Batteriepack (10) nach einem der Ansprüche 1 bis 10.

## Revendications

1. Bloc-batterie (10), comprenant :
un module de batterie (100) comprenant une pluralité d'éléments de batterie (110), et ayant une pluralité de tubes de refroidissement (120) disposés entre la pluralité d'éléments de batterie (110) et à travers lesquels un fluide de refroidissement pour refroidir les éléments de batterie (110) s'écoule ;
un boîtier de bloc (200) recevant le module de batterie (100) ; et
un organe de distribution de fluide de refroidissement (300) qui distribue un fluide de refroidissement vers la pluralité de tubes de refroidissement (120),
dans lequel le tube de refroidissement et l'organe de distribution de fluide de refroidissement (300) sont raccordés en contact l'un avec l'autre,
un organe joint d'étanchéité (400) entourant le côté extérieur du tube de refroidissement et l'organe de distribution de fluide de refroidissement (300),
dans lequel l'organe joint d'étanchéité (400) comprend :
une partie corps (410) dans laquelle un creux (411) est formé pour que le tube de refroidissement et l'organe de distribution de fluide de refroidissement (300) soient insérés ; et
une partie d'extension (420) faisant saillie à partir des deux extrémités de la partie corps (410), dans lequel une saillie de verrouillage (412) est formée pour être inclinée vers la partie centrale à partir des deux extrémités de la partie corps (410),
dans lequel une rainure de verrouillage (312) est formée sur le côté extérieur d'au moins un parmi le tube de refroidissement et l'organe de distribution de fluide de refroidissement (300), et
la saillie de verrouillage (412) est formée sur le côté intérieur de la partie corps (410) de manière à être accouplée à la rainure de verrouillage (312).

2. Bloc-batterie (10) selon la revendication 1,
dans lequel la partie d'extension (420) est formée pour s'étirer vers l'extérieur à partir de l'extrémité de la partie corps (410).

3. Bloc-batterie (10) selon la revendication 1,
dans lequel l'organe joint d'étanchéité (400) est fait d'un matériau élastique.

4. Bloc-batterie (10) selon la revendication 3,
dans lequel l'organe joint d'étanchéité (400) est fait de caoutchouc.

5. Bloc-batterie (10) selon la revendication 1, comprenant
un organe de fourniture de fluide (500) qui fournit un fluide de refroidissement,
dans lequel l'organe de distribution de fluide de refroidissement (300) comprend :
un tuyau de distribution (310) ayant une pluralité de parties d'accouplement (311) accouplées respectivement à la pluralité de tubes de refroidissement (120) ; et
un tuyau de raccordement (320) raccordant le tuyau de distribution (310) et l'organe de fourniture de fluide (500).

6. Bloc-batterie (10) selon la revendication 5, comprenant
un orifice de raccordement de tuyaux (330) raccordant le tuyau de distribution (310) et le tuyau de raccordement (320).

7. Bloc-batterie (10) selon la revendication 5,
dans lequel le tuyau de raccordement (320) comprend :
un premier tuyau de raccordement (321) accouplé à l'organe de fourniture de fluide (500) ; et
un second tuyau de raccordement (322) raccordé au premier tuyau de raccordement (321) et raccordé au tuyau de distribution (310).

8. Bloc-batterie (10) selon la revendication 7, comprenant
un organe à plusieurs orifices (340) raccordant le premier tuyau de raccordement (321) et le second tuyau de raccordement (322).

9. Bloc-batterie (10) selon la revendication 8,
dans lequel l'organe à plusieurs orifices (340) est configuré comme un orifice à 3 voies, et
l'orifice à 3 voies raccorde un premier tuyau de raccordement (321) et deux seconds tuyaux de raccordement (322).

10. Bloc-batterie (10) selon la revendication 5, comprenant
un raccord (350) raccordant l'organe de fourniture de fluide (500) et le tuyau de raccordement (320).

11. Véhicule (20) comprenant un bloc-batterie (10) selon l'une quelconque des revendications 1 à 10.
